# FASCICULE DE BREVET EUROPEEN

(11) **EP 2 021 985 B1**
(45) Date de publication et mention de la délivrance du brevet: **18.04.2012**
(21) Numéro de dépôt: 07731387.2
(22) Date de dépôt: 27.04.2007
(51) Int. Cl.: G06K 19/077, G06K 19/02

(54) **SUPPORT DE DISPOSITIF D'IDENTIFICATION RADIOFREQUENCE ET SON PROCEDE DE FABRICATION**
HOCHFREQUENZ-IDENTIFIKATIONSEINRICHTUNGSMEDIUM UND HERSTELLUNGSVERFAHREN DAFÜR
RADIO FREQUENCY IDENTIFICATION DEVICE MEDIUM AND METHOD FOR MAKING SAME

(30) Priorité: 28.04.2006 FR 0603860; 28.04.2006 FR 0603862
(43) Date de publication de la demande: 11.02.2009
(73) Titulaire: ASK S.A., 06560 Valbonne (FR)
(72) Inventeur: HALOPE, Christophe, 06400 Cannes (FR); LE PAIH, Anne, 38000 Grenoble (FR)
(86) Numéro de dépôt international: PCT/FR2007/000735
(87) Numéro de publication internationale: WO 2007/125214

(56) Documents cités:
- EP-A1- 0 952 542
- WO-A-2004/080726
- WO-A-2006/077339
- DE-A1-102004 008 840
- FR-A1- 2 824 018
- GB-A- 2 294 899
- US-A- 5 528 222
- US-A1- 2001 043 162
- US-A1- 2003 136 503

## Description

### Domaine technique

La présente invention concerne les dispositifs d'identification radiofréquence destinés à être intégrés à des objets tels que des documents de sécurité et concerne en particulier support de dispositif d'identification radiofréquence et son procédé de fabrication.

### Etat de la technique

Les dispositifs d'identification radiofréquence (RFID) sans contact sont de plus en plus utilisés pour l'identification des personnes circulant dans des zones à accès contrôlé ou transitant d'une zone à une autre. Un dispositif RFID sans contact est un dispositif constitué d'une antenne et d'une puce connectée aux bornes de l'antenne. La puce n'est généralement pas alimentée et reçoit son énergie par couplage électromagnétique entre l'antenne du lecteur et l'antenne du dispositif RFID, des informations sont échangées entre le dispositif RFID et le lecteur et en particulier les informations stockées dans la puce qui ont trait à l'identification du possesseur de l'objet sur lequel se trouve le dispositif RFID et son autorisation à pénétrer dans une zone à accès contrôlé.

Ainsi, les passeports peuvent incorporer des dispositifs RFID pour l'identification du possesseur du passeport. La mémoire de la puce contient des informations telles que l'identité du possesseur du passeport, son pays d'origine, sa nationalité, les visas des différents pays visités, les dates d'entrée, les restrictions de circulation, les éléments biométriques, etc. Le dispositif RFID se trouve généralement incorporé dans le plat de couverture inférieur du passeport. Une antenne est alors réalisée par sérigraphie d'encre chargée en particules d'argent sur le plat inférieur renforcé de la couverture du passeport. La puce est ensuite connectée par collage aux bornes de connexion de l'antenne. Ensuite, la page de garde du cahier des pages du passeport est contrecollée au verso du plat supérieur renforcé. Ce mode de réalisation présente l'inconvénient de ne pas résister à l'épreuve de l'eau et en particulier au passage du passeport en machine à laver le linge. En effet, si le papier sur lequel est sérigraphiée l'antenne n'est pas résistant à l'eau, celui-ci absorbe l'eau et gonfle, ce qui provoque des fractures au niveau de l'antenne et donc une rupture de la liaison électrique entre l'antenne et la puce.

Ce problème peut être pallié par l'utilisation d'un dispositif RFID composé d'un « inlay » en plastique. Dans ce cas, l'inlay comprend l'antenne et la puce, le tout étant noyé dans des couches de plastique. L'inlay est ensuite reporté par collage entre la page de garde et la couverture du passeport. Un des inconvénients de ce type de dispositif RFID repose sur la différence de matériau entre l'inlay et le passeport. Celui-ci étant en plastique, le collage entre les deux n'est pas optimum.

L'utilisation d'un support RFID avec au moins une de ses faces externes en papier permet de s'affranchir de cet inconvénient.

Mais le problème de l'utilisation du papier repose sur sa caractéristique à se délaminer dans son épaisseur en cas de tentative d'arrachement. La délamination peut se faire également sur les bords du support à partir d'un certain temps d'utilisation, ce qui présente un désavantage certain lorsque le support est destiné à être utilisé dans un document sécurisé dont la durée de vie doit s'étaler sur plusieurs années.

De plus, un document sécurisé tel qu'un passeport sous-entend que les pages du passeport et par conséquent la couverture supportant le dispositif RFID seront soumis aux impacts des coups de tampon ou apposition des visas ce qui expose la puce électronique à un risque non négligeable de destruction.

La demande de brevet US2003/0136503 A1 décrit un procédé de fabrication de labels RFID comprenant une antenne et une puce connectée à l'antenne en rouleau. D es couches de matériaux de différentes natures sont jointes ensembles de façon à protéger la puce et l'antenne.

La demande de brevet DE 10 2004 008 840 A1 décrit un procédé pour réaliser un document de valeur de type livret comportant un élément de sécurité et une unité transpondeur, lesquels sont entièrement scellées par des couches laminées formant une enveloppe. L'unité transpondeur peut également être laminée sur un support.

### Exposé de l'invention

C'est pourquoi le but de l'invention est de remédier à ces inconvénients en proposant un support de dispositif d'identification radiofréquence qui présente une bonne affinité de collage avec le papier et qui ne se délamine pas dans l'épaisseur et de plus qui protège le dispositif RFID des risques de destruction dus à des impacts ou à des chocs.

Un autre but de l'invention est de fournir un livret d'identité tel qu'un passeport intégrant un tel dispositif d'identification radiofréquence.

L'objet de l'invention est donc un support de dispositif d'identification radiofréquence selon la revendication 1.

Un autre objet de l'invention concerne un livret d'identité selon la revendication 8.

Enfin, un autre objet de l'invention concerne un procédé de fabrication d'un support de dispositif d'identification radiofréquence (RFID) selon la revendication 10.

### Description brève des figures

Les buts, objets et caractéristiques de l'invention apparaîtront plus clairement à la lecture de la description qui suit faite en référence aux dessins dans lesquels :
La figure 1 représente le support d'antenne de face sur lequel est reporté le dispositif RFID,
La figure 2 représente en coupe le support d'antenne sur lequel est reporté le dispositif RFID,
La figure 3 représente une coupe des différentes couches constitutives du support de dispositif RFID,
La figure 4 représente une coupe du support de dispositif RFID,
La figure 5 représente la mise en place du support de dispositif RFID sur la couverture d'un livret d'identité,
La figure 6 représente une coupe de la couverture du livret et la mise en place du dispositif RFID,
La figure 7 représente une coupe du support de dispositif RFID selon l'invention,
La figure 8 représente une coupe de la couverture du livret et la mise en place du support de dispositif RFID selon l'invention.
La figure 9 représente la mise en place du cahier des pages intérieures du livret.

### Description de l'invention

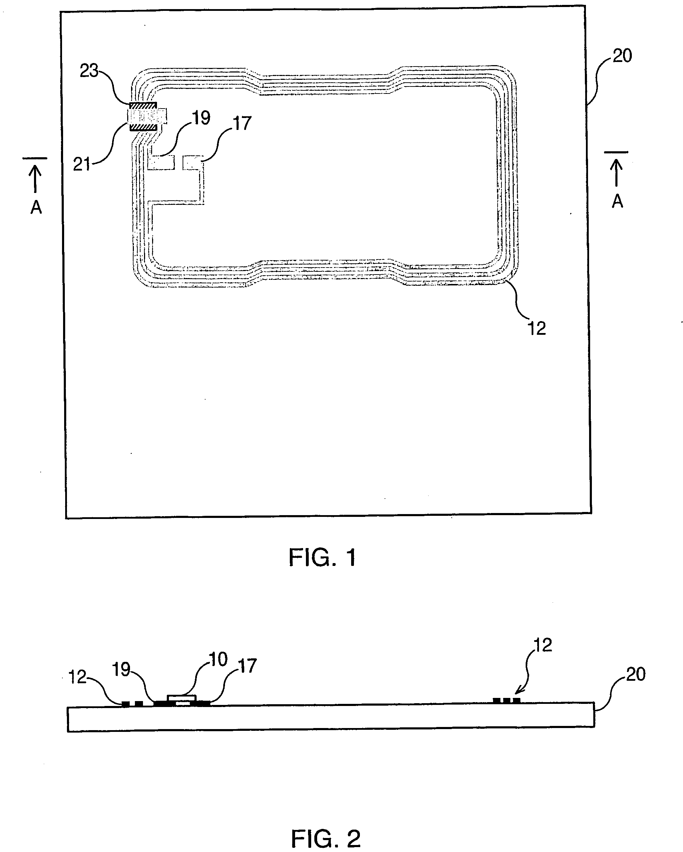

En référence à la figure 1, une première couche 20 sert de support à l'antenne et a pour dimensions celles correspondant à un passeport fermé, c'est-à-dire environ 88 x 125 mm. Le matériau de la couche 20 est un matériau qui ne flue pas donc qui ne se déforme pas de façon irréversible lorsque la température augmente. Le matériau de la couche 20 est de préférence un matériau dont la cohésion est très peu modifiée lors d'une opération de lamination qui consiste à exercer une pression à chaud. L'antenne 12 constituant un élément essentiel du dispositif RFID est constituée de une ou plusieurs spires d'encre conductrice polymère sérigraphiée, chargée en éléments conducteurs tels que l'argent, le cuivre ou le carbone. Chacune des extrémités de l'antenne est reliée à un des deux plots 17 et 19 de connexion de l'antenne également sérigraphiés. Les spires sont reliées entre elles par un pont électrique 21 appelé plus communément cross-over. Une bande isolante 23 d'encre diélectrique est sérigraphiée entre le cross-over et certaines des spires de l'antenne 12 afin de permettre le croisement des spires sans contact électrique. Selon un mode de réalisation préféré de l'invention, l'antenne est sérigraphiée sur ce matériau en plusieurs étapes. La première étape, consiste à sérigraphier les spires de l'antenne 12 et les deux plots de connexions 17 et 19 de l'antenne. La deuxième étape, consiste à sérigraphier une bande isolante 23 pour permettre le croisement des spires de l'antenne 12. La troisième étape, consiste à sérigraphier le pont électrique 21 permettant de connecter la spire de l'antenne 12 située le plus à l'extérieur du groupe de spires.

L'étape suivante consiste à venir connecter la puce sur les plots de connexion de l'antenne 12. Une matière diélectrique adhésive est déposée sur le support d'antenne 20, entre les deux plots de connexion 17 et 19 de l'antenne 12. Cette matière adhésive est déposée avant de placer la puce sur le support, contrairement au procédé "Flip Chip" classique dans lequel l'adhésif est déposé une fois la puce connectée. Cette étape est donc beaucoup plus facile à réaliser et les rendements obtenus sont bien meilleurs. L'adhésif utilisé est de préférence une résine époxy qui réticule à 150°C. Il est également possible d'utiliser une colle de type cyanoacrylate qui polymérise à température ambiante.

Une fois la matière adhésive déposée, la puce 10 est positionnée sur le support d'antenne de manière à ce que les plots de connexion 17 et 19 de la puce soient en regard des plots de connexion de l'antenne tel que représenté en coupe sur la figure 2. Une pression est ensuite exercée sur la puce 10 de façon à ce que les plots de connexion non déformable de la puce s'enfoncent dans les plots de connexion 17 et 19 de l'antenne 12. Sous la pression exercée, les plots de connexion de l'antenne sont alors déformés. Le support d'antenne 20 est compressé sous la pression exercée sur la puce et peut également se déformer. On constate alors que la surface de contact entre les plots de connexion de la puce et les plots de connexion de l'antenne 12 est maximale et ce, même lorsque la pression a cessé d'être exercée. Les plots de connexion de la puce sont de préférence de forme conique. Sous l'effet de la pression exercée, la matière diélectrique adhésive s'étale et vient recouvrir toute la surface de la puce entre les plots de connexion et pénètre en profondeur dans le support d'antenne. Elle permet alors de renforcer l'assemblage mécanique entre la puce 10 et le support d'antenne 20, et par la même, le contact électrique entre la puce et l'antenne. La matière diélectrique adhésive utilisée est de préférence fluide et à fort pouvoir de pénétration. Le support subit alors un passage dans un four afin de réticuler la colle.

Une fois la puce 10 fixée au support, l'étape suivante consiste à laminer ensemble le dispositif RFID et les différentes couches qui constitueront le support du dispositif RFID. Le mode de réalisation décrit est adapté pour que le support de dispositif RFID obtenu puisse être intégré dans un livret d'identité tel qu'un passeport.

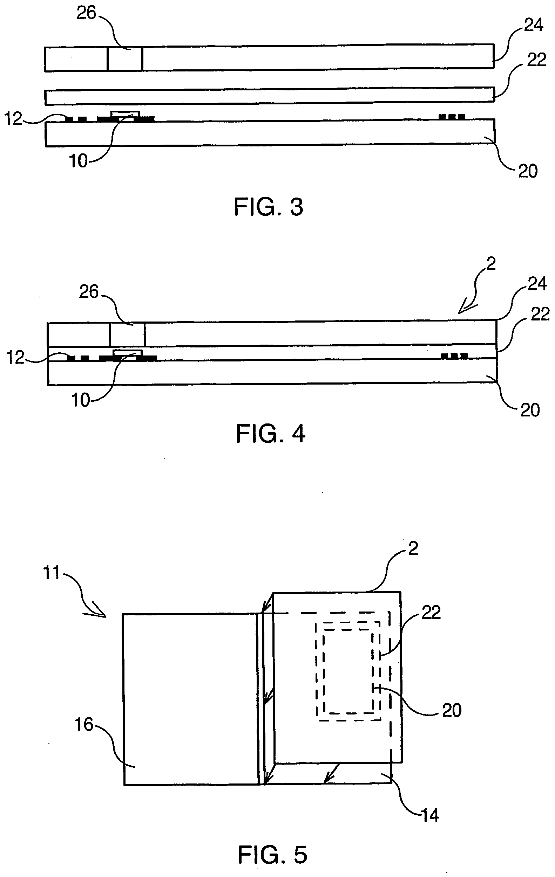

Selon un mode de réalisation qui ne fait pas partie de l'invention, les différentes couches constitutives du support de dispositif RFID tel que montré sur la figure 3 sont constitués du support d'antenne 20, d'une couche de thermoplastique 22 et d'une couche supérieure 24

Le dispositif est réalisé par lamination des différentes couches une fois que la puce est fixée sur le support d'antenne 20. Une première couche de thermoplastique 22 est disposée sur le support d'antenne 20. L'épaisseur de la couche de thermoplastique est comprise entre 40 et 80 µm et est de préférence de l'ordre de 50 µm. La couche supérieure 24 comporte une cavité 26 située de façon à se superposer à la puce et dont la superficie est supérieure à celle de la puce de sorte que la pression exercée lors de l'étape de lamination n'atteint pas la puce car la pression s'exerce uniformément sur toute la surface de la feuille mais ne s'exerce pas à l'endroit de la cavité placée au-dessus de l'emplacement de la puce ; La cavité 26 est de préférence circulaire d'un diamètre de l'ordre de 6 mm.

L'étape de lamination consiste à souder par pressage à chaud les couches 20, 22, 24 afin d'obtenir un support de dispositif RFID 2 tel que représenté sur la figure 4. La température et la pression atteintes sont respectivement de l'ordre de 160°C et 200 bars. Comme il a été précisé précédemment, le support d'antenne 20 est de préférence dans un matériau qui ne flue pas donc qui ne se déforme pas de façon irréversible lorsque la température augmente jusqu'à 160°C. De plus, ce matériau ne se délamine pas volontairement ou involontairement avec le temps. Le support 20 est de préférence un papier synthétique constitué d'une seule couche non orientée d'un polymère tel que du polyéthylène ou du polypropylène chargée en charges minérales entre 40 et 80%. Sa composition lui confère une faible densité de l'ordre de 0,57 g/cm³ grâce à son réseau microporeux et son épaisseur est de l'ordre de 180 µm. L'épaisseur pourrait être inférieure. Bien que la couche de thermoplastique 22, directement en contact avec la puce, ne soit pas percée d'une cavité à l'endroit de la puce, la pression exercée lors de la lamination n'est pas transmise à la puce au point de l'endommager.

Aux valeurs de température et de pression pratiquées pendant l'étape de lamination, le thermoplastique composant la couche 22 se ramollit et se fluidifie tout en étant emprisonner entre les deux couches respectives du support d'antenne 20 et de la couche supérieure 24. Pendant la lamination, le support d'antenne confère au dispositif composé de l'antenne 10 et de la puce 12 une rigidité et une cohésion qui empêche toute rupture électrique puisque le matériau de la couche formant le support d'antenne résiste sans se déformer et surtout sans fluer aux températures et pression de l'étape de lamination. La couche de thermoplastique 22 rigidifié a emprisonné les reliefs du support d'antenne 20 de sorte que l'antenne 10 et la puce 12 sont noyées dans le thermoplastique 22. En effet, une coupe des différentes couches 20, 22, 24 permet de mettre en évidence le fait que l'antenne 10 et la puce 12 se sont moulées dans le thermoplastique 22, le thermoplastique ayant recouvert la puce à l'endroit de la cavité 26. Ainsi, en milieu humide, c'est la couche de thermoplastique qui confère au support de dispositif RFID une rigidité et une cohésion qui empêche toute rupture électrique. Le thermoplastique permet de souder ensemble les deux couches 20 et 24 et joue le rôle de colle entre ces deux couches.

La couche supérieure 24 d'une épaisseur de 180 µm est de préférence dans le même matériau que le support d'antenne 20 donc dans du papier synthétique tel que définit plus haut. Le support du dispositif RFID 2 ainsi réalisé par lamination des couches 20, 22, 24 et représenté en coupe sur la figure 3 a une épaisseur environ égale à 350 µm.

La flexibilité et la souplesse du support de dispositif RFID 2 obtenu sont fonction de l'épaisseur de la couche de thermoplastique 22 utilisée. Plus l'épaisseur de la couche de thermoplastique est réduite et plus le dispositif RFID est flexible et souple.

Conformément à la figure 5, le support du dispositif RFID 2 est collé sur l'un des deux plats de la couverture 11 du livret d'identité, de préférence sur le plat inférieur 14 mais pourrait aussi être collé sur le plat supérieur 16. La face du support de dispositif RFID opposée au support d'antenne et de puce, donc la couche 24 est collée sur le plat de la couverture du livret d'identité de façon à protéger la puce le plus possible des impacts qui pourraient avoir lieu à l'intérieur du livret. De façon générale, le support de dispositif RFID 2 est collé à l'aide d'une colle qui, une fois sèche est insoluble dans l'eau.

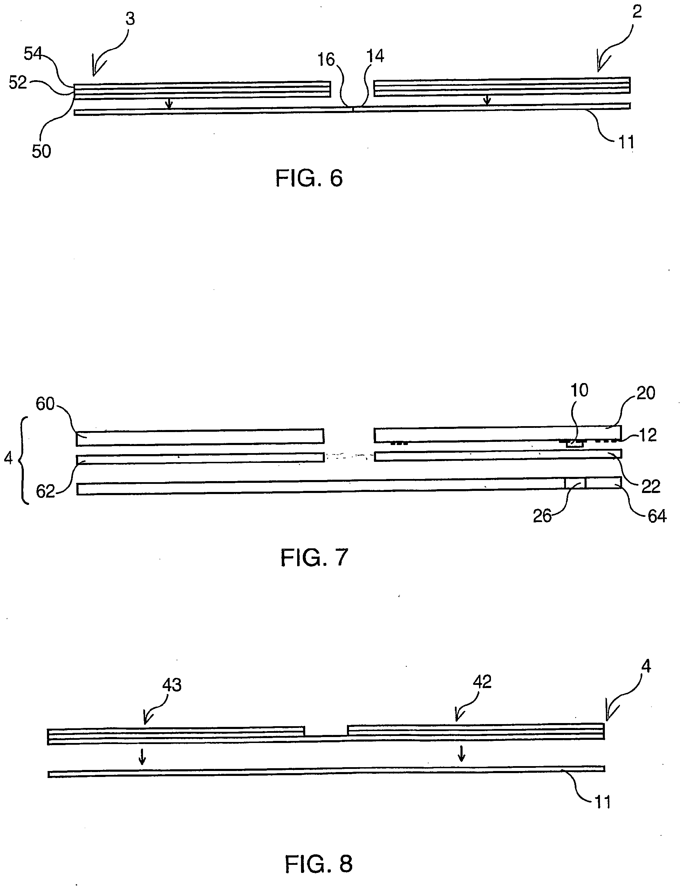

Afin de garder la même épaisseur sur l'ensemble de la couverture du livret, il est avantageux d'apposer sur l'autre plat de la couverture du livret, celui qui ne porte pas le support de dispositif RFID, une ou plusieurs couches formant un support 3 tel que représenté sur la figure 6 et dont l'épaisseur totale est équivalente à l'épaisseur du support de dispositif RFID 2. Le support 3 est donc de préférence de taille identique au support de dispositif 2. Par exemple et conformément à la figure 6, il est possible de fabriquer un support 3 sans dispositif RFID constitué d'une seule couche de papier synthétique 50 ou bien, de laminer ensemble une couche de papier synthétique, une couche de thermoplastique et une couche de papier synthétique, la couche unique ou l'ensemble des couches étant de même épaisseur totale que l'ensemble des couches 20, 22 et 24. Le support 3 ainsi fabriqué est ensuite collé sur le second plat de la couverture 11 du livret, tout en laissant une bande libre de la couverture à l'emplacement de la charnière du livret.

Selon l'invention, les supports 2 et 3 sont fabriqués ensemble de façon à être solidaire l'un de l'autre par une seule couche supérieure de papier synthétique 64 tel que représenté sur la figure 7 par un support de dispositif RFID 4. Une première couche de thermoplastique 22 est disposée sur le support d'antenne 20 dont l'épaisseur est comprise entre 40 et 80 µm mais de préférence de l'ordre de 50 µm. Une seconde couche de thermoplastique 62 est également disposée sur une seconde couche 60 de papier synthétique. Les couches 20, 22, 60 et 62 ayant la même taille correspondant dans la longueur à la taille d'un livret d'identité fermé mais dont la largeur est légèrement inférieure à la largeur d'un livret d'identité fermé. Une couche supérieure 64 est disposé sur les couches 22 et 62 de façon à laisser un espace entre elles. La couche 64 comporte une cavité 26 située de façon à se superposer à la puce et dont la superficie est supérieure à celle de la puce de sorte que la pression exercée lors de l'étape de lamination n'atteint pas la puce car la pression s'exerce uniformément sur toute la surface de la feuille mais ne s'exerce pas à l'endroit de la cavité placée au-dessus de l'emplacement de la puce ; La cavité 26 est de préférence circulaire d'un diamètre de l'ordre de 6 mm. L'étape de lamination consiste alors à souder par pressage à chaud toutes les différentes couches 20, 22, 60, 62 et 64.

Le support 4 faisant office de support de dispositif RFID pour le mode d'exécution de l'invention est représenté en coupe sur la figure 8. De la taille du livret d'identité ouvert, il comporte deux parties épaisses 42 et 43, la partie 42 contenant le dispositif RFID, les deux parties venant se superposer aux plats 14 et 16 de la couverture 11 du livret et une partie moins épaisse destinée à se superposer à la charnière du livret d'identité.

Mais le support de dispositif RFID 2 tel que décrit peut également être intégré au livret par collage de l'une de ses faces, mais de préférence du côté du support d'antenne, sur tout type d'objet tel que vêtements, livres, documents papier, emballages, cartons, etc.

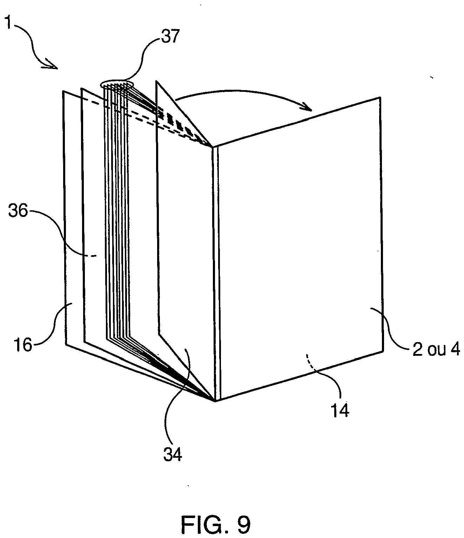

Le livret d'identité 1 représenté de façon schématique sur la figure 9 est complètement formé par la mise en place du cahier des pages intérieures 37. la méthode de confection consiste à élaborer le cahier des pages intérieures en utilisant un fil sécurisé pour les relier entre elles. Dans la fabrication d'un passeport classique, les pages de garde sont contrecollées sur les plats de couverture, la page de garde 36 étant contrecollée au plat supérieur 16 alors que la page de garde inférieure 34 est contrecollée au plat inférieur 14. Ainsi, selon un mode de réalisation qui ne fait pas partie de l'invention, le verso de la page de garde inférieure 34 du cahier des pages du livret d'identité est encollé puis pressé contre le support de dispositif RFID 2 collé sur le plat inférieur 14 de la couverture du livret, donc du côté de la couche du support d'antenne 20. Ou bien, selon le mode d'exécution de l'invention décrit précédemment, le verso de la page de garde inférieure 34 du cahier des pages du livret d'identité est encollé puis pressé contre la partie 42 du support 4, la partie 42 étant celle contenant la puce et l'antenne tandis que le recto de la page de garde 36 est encollé puis pressé contre la partie 43 du support 4. La colle utilisée est de préférence une colle qui, une fois sèche devient insoluble dans l'eau.

L'utilisation d'un papier synthétique dans la réalisation du support du dispositif RFID est un avantage incontestable de l'invention.

D'une part, le papier synthétique facilite l'opération de lamination réalisée à des températures de l'ordre de 160°C, puisqu'il est stable à ces températures contrairement aux matériaux thermoplastiques tel que le PVC ou le PETG. Le support du dispositif RFID 2 ou 4 réalisé selon l'invention présente du papier synthétique sur ses deux faces, ce qui facilite son collage et optimise son intégration sur le livret d'identité puisque les collages sont effectués papier contre papier synthétique. En effet, le papier synthétique présente une faible densité due à sa structure microporeuse, ce qui lui confère une bonne affinité de collage avec le papier contrairement aux matières plastiques classiques telles que le PVC ou le PET. Le livret d'identité obtenu ainsi procure l'avantage d'une grande cohésion entre toutes les parties qui le composent et en particulier entre le support de dispositif RFID et le livret d'identité lui-même. En effet, la colle pénètre en profondeur dans l'épaisseur du papier synthétique comme elle pénètre dans le papier et donc en particulier dans le papier composant la couverture du livret, ce qui rend impossible la désolidarisation des couches 20, 22 et 24 entre elles et ce qui rend les trois couches constitutives du support, indissociables.

Le thermoplastique utilisé pour les couches 22 et 52 est préférentiellement du polychlorure de vinyle (PVC), mais peut être aussi du polyester (PET, PETG), du polypropylène (PP), du polycarbonate (PC) ou de l'acrylonitrile-butadiène-styrène (ABS).

De plus, l'arrachement volontaire du support de dispositif RFID intégré au livret est impossible car le papier synthétique ne se délamine pas dans l'épaisseur.

Lors de la lamination ou ultérieurement, l'extérieur de la couverture du livret peut être soumis à une plaque comportant des reliefs particuliers de façon à produire un grain particulier sur la couverture et ce de façon à rendre infalsifiable le livret d'identité.

De façon avantageuse, le support de dispositif RFID et le livret d'identité selon l'invention peuvent subir un passage en machine à laver sans que la liaison électrique entre la puce et l'antenne ne soit altérée donc en gardant la possibilité d'être lus par couplage électromagnétique avec un lecteur prévu à cet effet.

Le support de dispositif RFID et le dispositif RFID peuvent également être réalisés au format ISO des cartes à puce de façon à servir pour la fabrication de carte à puce sans contact. Les deux couches de papier synthétiques externes et la couche de thermoplastique sont au format ISO des cartes à puce et l'antenne est adaptée également pour que la taille des spires soient légèrement inférieures au format ISO des cartes à puce. Dans ce cas, une étape supplémentaire au procédé de fabrication précédemment décrit consiste à venir personnaliser la carte en réalisant une impression sur l'une des faces de la carte ou les deux.

## Revendications

1. Support de dispositif d'identification radiofréquence (4) comprenant une antenne (12) sérigraphiée sur un support d'antenne (20) et une puce (10) connectée aux bornes de connexion (17 et 19) de ladite antenne,
le support comprenant également une première couche de thermoplastique (22) laminée sur ledit support d'antenne (20), une seconde couche de thermoplastique (62) laminée sur une couche (60) de papier synthétique et une couche supérieure (64) en papier synthétique laminée sur lesdites couches de thermoplastique (22 et 62) de façon à laisser un espace entre lesdites couches de thermoplastique, le support obtenu comprenant deux parties épaisses (42, 43) une partie épaisse (42) contenant le dispositif RFID.

2. Support de dispositif RFID (4) selon la revendication 1, dans lequel ladite couche supérieure (64) comprend une cavité (26) située de façon à se superposer à ladite puce (10).

3. Support de dispositif RFID (4) selon la revendication 1 ou 2, dans lequel ladite puce (10) est collée sur ledit support d'antenne (20) à l'aide d'une matière diélectrique adhésive de façon à ce que les plots de connexion de la puce soient en regard des plots de connexion (17 et 19) de l'antenne (12).

4. Support de dispositif RFID (4) selon la revendication 3, dans lequel ladite matière adhésive est une résine époxy qui réticule à 150°C.

5. Support de dispositif RFID (4) selon l'une des revendications précédentes, dans lequel la lamination est réalisée à des valeurs de température et de pression de l'ordre de 160°C et 200 Bars.

6. Support de dispositif RFID (4) selon l'une des revendications 1 à 5 dans lequel le papier synthétique de ladite couche supérieure (64) est fait d'un matériau qui ne flue pas c'est à dire qui ne se déforme pas lorsque la température augmente.

7. Support de dispositif RFID (4) selon l'une des revendications précédentes dans lequel ladite premiére couche de thermoplastique (22) a une épaisseur de 50µm.

8. Livret d'identité (1) comprenant un support de dispositif RFID (4) selon l'une des revendications 1 à 7 dans lequel le support de dispositif RFID (4) est de la taille du livret d'identité ouvert lesdites deux parties épaisses (42, 43) venant se superposer aux plats (14 et 16) de la couverture (11) du livret, le support (4) comporte également une partie moins épaisse destinée à se superposer à la charnière du livret d'identité.

9. Livret d'identité selon la revendication 8, dans lequel ledit support de dispositif RFID (4) est collé à l'intérieur dudit livret d'identité (1) grâce à une colle qui, une fois sèche est insoluble dans l'eau.

10. Procédé de fabrication d'un support de dispositif d'identification radiofréquence (4), le dispositif comprenant une antenne et une puce connectée à l'antenne, ledit procédé comprenant les étapes suivantes :
- sérigraphier une antenne (12) comportant des plots de connexion (17 et 19) sur un support d'antenne (20),
- déposer de la matière diélectrique adhésive entre lesdits plots de connexion de l'antenne,
- positionner la puce (10) sur ledit support d'antenne (20) de manière à ce que les plots de ladite puce soient en regard desdits plots de connexion de ladite antenne,
- connecter la puce sur lesdits plots de connexion de ladite antenne en exerçant une pression sur la puce,
- déposer sur ledit support d'antenne une première couche de thermoplastique (22) ,
- déposer une seconde couche de thermoplastique (62) sur une couche (60) de papier synthétique,
- déposer une couche supérieure d'un matériau qui ne flue pas (64) tel qu'un papier synthétique sur les couches (22 et 62), la couche supérieure (64) étant munie d'une cavité (26) à l'endroit de la puce (10),
- laminer ensemble ledit support d'antenne (20), les couches de thermoplastique (22 et 62), la couche de papier synthétique (60) et la couche supérieure (64) de façon à obtenir un dispositif RFID (4) formé de deux parties (42 et 43) de dimension identique, une partie (42) contenant le dispositif RFID, et une partie moins épaisse située entre les deux parties de dimension identique (42 et 43).

11. Procédé de fabrication d'un livret d'identité à dispositif d'identification radiofréquence (RFID) selon la revendication 10, ledit dispositif (4) étant intégré entre les plats (14 et 16) de la couverture du livret et les pages de garde (34 et 36), ledit procédé comprenant les étapes suivantes après l'étape de lamination :
- coller le support du dispositif RFID (4) sur lesdits plats de la couverture du livret d'identité, en encollant la face opposé au support d'antenne (20), de façon à ce que la partie la moins épaisse du support de dispositif RFID (4) se superpose à la charnière du livret d'identité.
- mettre en place le cahier des pages intérieures (37),
- coller la page de garde (34) contre ledit support du dispositif RFID (4), pour cela le verso de la page de garde inférieure (34) du cahier des pages du livret d'identité est encollé puis pressé contre une partie (42) du support 4, ladite partie (42) étant celle contenant la puce et l'antenne tandis que le recto de la page de garde (36) est encollé puis pressé contre l'autre des deux parties (43) du support (4).

## Claims

1. A radio frequency identification device support (4) comprising an antenna (12) screen printed on a antenna support (20) and a chip (10) connected to the connection terminals (17 and 19) of said antenna,
the support comprising also a first thermoplastic layer (22) laminated on said antenna support (20), a second thermoplastic layer (62) laminated on a layer (60) of synthetic paper and a top layer (64) of synthetic paper laminated on said thermoplastic layers (22, 62) so as to leave a space between said thermoplastic layers, the support obtained comprising two thick parts (42, 43) a thick part (42) containing the RFID device..

2. The RFID device support (4) according to claim 1, in which said top layer (64) includes a cavity (26) located in such a way that it overlaps said chip (10).

3. The RFID device support (4) according to claim 1 or 2, in which said chip (10) is glued on said antenna support (20) using an adhesive dielectric material so that the contacts of the chip are located opposite the contacts (17 and 19) of the antenna (12).

4. The RFID device support (4) according to claim 3, in which said adhesive material is an epoxy resin that cross-links at 150°C.

5. The RFID device support (4) according to one of previous claims, in which the lamination is done at values of temperature and pressure in the order of 160 °C and 200 bar.

6. The RFID device support (4) according to any of claims 1 to 5 in which the synthetic paper of said top layer (64) is made of a material which does not creep, that is to say which does not deform when the temperature increases.

7. The RFID device support (4) according to one of previous claims in which said first thermoplastic layer (22) has a thickness of 50 µm.

8. The identity booklet (1) comprising an RFID device support (4) according any of claims 1 to 7 in which said RFID device support (4) has a size equal to that of the open identity booklet said two thick parts (42 and 43) overlapping the cover (11) boards (14 and 16) of the booklet, the support (4) comprising also a thinner part designed to overlap the identity booklet's joint.

9. The identity booklet according to claim 8, in which said RFID device support (4) is glued inside said identity booklet (1) using a glue which, once dry, is insoluble in water.

10. A method for manufacturing a radio frequency identification device support (4), the device comprising an antenna and a chip connected to the antenna, said method including the following steps:
- screen printing an antenna (12) having contacts (17 and 19) on a antenna support (20),
- placing adhesive dielectric material between said contacts of the antenna,
- positioning the chip (10) on said antenna support (20) so that the contacts of said chip are located opposite said contacts of said antenna,
- connecting the chip to said contacts of said antenna by exerting pressure on the chip,
- placing on said antenna support a first thermoplastic layer (22),
- placing a second thermoplastic layer (62) on a layer (60) of synthetic paper,
- placing a top layer of a material that does not creep (64) such as synthetic paper on said layers (22 and 62), the top layer (64) being provided with a cavity (26) at the location of the chip (10),
- laminating together said antenna support (20), the thermoplastic layers (22 and 62), the layer of synthetic paper (60) and the top layer (64) to obtain an RFID device (4) made up of two parts (42 and 43) of identical dimension, a part (42) containing the RFID device, and a thinner part located between the two parts of identical dimension (42 and 43).

11. A method for manufacturing an identity booklet with a radio frequency identification device (RFID) according to claim 10, said device (4) being integrated between the cover boards (14 and 16) of the booklet's cover and the flyleaves (34 and 36), said method including the following steps after the lamination step:
- gluing the RFID device support (4) on said cover boards of the identity booklet, by gluing the opposite side to the antenna support (20), so that the thinner part of the RFID device support (4) superimposes on the identity booklet's joint.
- installing the quire of inside pages (37),
- gluing the flyleaf (34) against said RFID device support (4); to this end, the back of the bottom flyleaf (34) of the quire of pages of the identity booklet is pasted then pressed against a part (42) of the support (4), said part (42) being the one containing the chip and the antenna whereas the front of the flyleaf (36) is pasted then pressed against the other of two parts (43) of the support (4).

## Patentansprüche

1. Träger einer Hochfrequenz-Identifikationsvorrichtung (4), die eine Antenne (12), die durch Siebdruck auf einen Antennenträger (20) aufgebracht wird, und einen Chip (10) enthält, der mit den Anschlussklemmen (17 und 19) der Antenne verbunden ist, wobei der Träger ebenfalls eine erste Thermoplastschicht (22), die auf den Antennenträger (20) laminiert wird, eine zweite Thermoplastschicht (62), die auf eine Schicht (60) aus synthetischem Papier laminiert wird, und eine obere Schicht (64) aus synthetischem Papier enthält, die so auf die Thermoplastschichten (22 und 62) laminiert wird, dass ein Zwischenraum zwischen den Thermoplastschichten freigelassen wird, wobei der erhaltene Träger zwei dicke Teile (42, 43) enthält, wobei ein dicker Teil (42) die RFID-Vorrichtung enthält.

2. Träger einer RFID-Vorrichtung (4) nach Anspruch 1, bei dem die obere Schicht (64) einen Hohlraum (26) enthält, der so angeordnet ist, dass er den Chip (10) überlagert.

3. Träger einer RFID-Vorrichtung (4) nach Anspruch 1 oder 2, bei dem der Chip (10) mit Hilfe eines haftenden Dielektrikums so auf den Antennenträger (20) geklebt wird, dass die Anschlusskontakte des Chips sich gegenüber den Anschlusskontakten (17 und 19) der Antenne (12) befinden.

4. Träger einer RFID-Vorrichtung (4) nach Anspruch 3, bei dem das haftende Material ein Expoxidharz ist, das bei 150°C vernetzt.

5. Träger einer RFID-Vorrichtung (4) nach einem der vorhergehenden Ansprüche, bei dem die Laminierung bei Temperatur- und Druckwerten in der Größenordnung von 160°C und 200 Bar durchgeführt wird.

6. Träger einer RFID-Vorrichtung (4) nach einem der Ansprüche 1 bis 5, bei dem das synthetische Papier der oberen Schicht (64) aus einem nicht kriechenden Material besteht, d.h. das sich bei steigender Temperatur nicht verformt.

7. Träger einer RFID-Vorrichtung (4) nach einem der vorhergehenden Ansprüche, bei dem die erste Thermoplastschicht (22) eine Dicke von 50 µm hat.

8. Personenstandsbuch (1), das einen Träger einer RFID-Vorrichtung (4) nach einem der Ansprüche 1 bis 7 enthält, wobei der Träger der RFID-Vorrichtung (4) die Größe des offenen Personenstandsbuchs zwischen den zwei dicken Teilen (42, 43) hat, die die Deckel (14 und 16) des Einbands (11) des Buchs überlagern, wobei der Träger (4) ebenfalls einen weniger dicken Teil aufweist, der dazu bestimmt ist, den Ansatzfalz des Personenstandsbuchs zu überlagern.

9. Personenstandsbuch nach Anspruch 8, bei dem der Träger der RFID-Vorrichtung (4) ins Innere des Personenstandsbuchs (1) mit Hilfe eines Klebstoffs geklebt wird, der, wenn er trocken ist, wasserunlöslich ist.

10. Verfahren zur Herstellung eines Trägers einer Hochfrequenz-Identifikationsvorrichtung (4), wobei die Vorrichtung eine Antenne und einen mit der Antenne verbundenen Chip enthält, wobei das Verfahren die folgenden Schritte enthält:
- Siebdrucken einer Anschlusskontakte (17 und 19) aufweisenden Antenne (12) auf einen Antennenträger (20),
- Aufbringen eines haftenden Dielektrikums zwischen den Anschlusskontakten der Antenne,
- Positionieren des Chips (10) auf dem Antennenträger (20) derart, dass die Anschlüsse des Chips sich gegenüber den Anschlusskontakten der Antenne befinden,
- Verbinden des Chips mit den Anschlusskontakten der Antenne durch Ausüben eines Drucks auf den Chip,
- Aufbringen einer ersten Thermoplastschicht (22) auf den Antennenträger,
- Aufbringen einer zweiten Thermoplastschicht (62) auf eine Schicht (60) aus synthetischem Papier,
- Aufbringen einer oberen Schicht eines nicht kriechenden Materials (64), wie eines synthetischen Papiers, auf die Schichten (22 und 62), wobei die obere Schicht (64) mit einem Hohlraum (26) an der Stelle des Chips (10) versehen ist,
- Laminieren des Antennenträgers (20) mit den Thermoplastschichten (22 und 62), der Schicht aus synthetischem Papier (60) und der oberen Schicht (64), um eine aus zwei Teilen (42 und 43) gleicher Abmessung, wobei ein Teil (42) die RFID-Vorrichtung enthält, und einem weniger dicken Teil, der sich zwischen den zwei Teilen gleicher Abmessung (42 und 43) befindet, geformte RFID-Vorrichtung (4) zu erhalten.

11. Verfahren zur Herstellung eines Personenstandsbuchs mit Hochfrequenz-Identifikationsvorrichtung (RFID) nach Anspruch 10, wobei die Vorrichtung (4) zwischen die Deckel (14 und 16) des Einbands des Buchs und die Vorsatzblätter (34 und 36) eingefügt ist, wobei das Verfahren nach dem Schritt des Laminierens die folgenden Schritte enthält:
- Kleben des Trägers der RFID-Vorrichtung (4) auf die Deckel des Einbands des Personenstandsbuchs, indem die dem Antennenträger (20) entgegengesetzte Seite eingekleistert wird, so dass der am wenigsten dicke Teil des Trägers der RFID-Vorrichtung (4) den Ansatzfalz des Personenstandsbuchs überlagert,
- Anordnen des Hefts der Innenseiten (37),
- Kleben des Vorsatzblatts (34) gegen den Träger der RFID-Vorrichtung (4), hierzu wird die Rückseite des inneren Vorsatzblatts (34) des Hefts der Seiten des Personenstandsbuchs eingekleistert und dann gegen einen Teil (42) des Trägers (4) gedrückt, wobei der Teil (42) derjenige ist, der den Chip und die Antenne enthält, während die Vorderseite des Vorsatzblatts (36) eingekleistert und dann gegen den anderen (43) der zwei Teile des Trägers (4) gedrückt wird.
